# EUROPEAN PATENT APPLICATION

(11) **EP 2 533 230 A2**
(43) Date of publication of application: **12.12.2012**
(21) Application number: 12004350.0
(22) Date of filing: 08.06.2012
(51) Int. Cl.: G09F 3/03

(54) **A security tape**

(30) Priority: 10.06.2011 GB 201109696
(71) Applicant: Advanced Labelling Systems Limited, Thame Oxfordshire OX9 3SJ (GB)
(72) Inventor: Donaldson, Philip Allen, Thame, Oxon OX9 3SJ (GB); Lancaster, Timothy John, Thame, Oxon OX9 3SJ (GB)
(74) Representative: Unwin, Stephen Geoffrey

(57) **Abstract**

A security tape is disclosed comprising an elongate strip (11) of transparent sheet material having a first face and a second face, printed graphics (13A,13B)being provided on the first face so as to be visible when viewed through said second face, pressure sensitive adhesive (14) being provided on the first face (and the printed graphics thereon) for securing the tape to an article and/or to itself, and a remotely detectable security device is secured to the first face of the strip by the adhesive layer (14) and a release coating (12) is provided on the second surface so the tape can be wound onto itself in a roll. A method of manufacturing a security strip (11) is also disclosed comprising the steps: printing graphics on the first face of the strip (11) so as to be visible when viewed through said second face; applying a pressure sensitive adhesive (14) to the first face (and the printed graphics thereon); and securing a remotely detectable security device to the first face of the strip (11). The use of a security tape as described above to secure a remotely detectable security device to an article by affixing a length of said tape to the article is also disclosed.

## Description

### FIELD OF THE INVENTION

This invention relates to a method of manufacturing a security tape for affixing a remotely detectable security device (eg an EAS or RFID device) to an article. It also relates to a security tape made by the method and to use of the security tape.

### BACKGROUND ART

Self-adhesive security tags are known and an example of one used to secure an article such as a CD case is described in US5984388. Such security tags may be provided in the form of a roll with a backing liner provided between the layers of the roll to prevent the layers sticking to each other and to protect graphics printed on the tag. Similar security labels are also used to attach EAS devices to larger articles and this usually involves the use of longer lengths of material. As the length of material applied to an article becomes longer, It becomes increasing cumbersome to apply manually or with hand-held applicators and the amount of waste In the form of backing liner increases.

The present invention aims to provide a security tape which reduces or overcomes these problems.

### SUMMARY OF THE INVENTION

According to a first aspect of the invention, there Is provided a security tape comprising an elongate strip of transparent sheet material having a first face and a second face, printed graphics provided on said first face so as to be visible when viewed through said second face, pressure sensitive adhesive provided on the first face (and the printed graphics thereon) for securing the tape to an article and/or to Itself, a remotely detectable security device secured to the first face of the strip by said adhesive layer and a release coating on said second surface so the tape can be wound onto itself in a roll.

According to a second aspect of the invention, there is provided method of manufacturing a security strip comprising an elongate strip of transparent material having a first face and a second face with a release coating on said second face, the method comprising the steps:
a) printing graphics on the first face of the strip so as to be visible when viewed through said second face;
b) applying a pressure sensitive adhesive to said first face (and the printed graphics thereon); and
c) securing a remotely detectable security device to the first face of the strip.

In a preferred method, steps a) to c) are carried out on a wide strip which Is subsequently divided into a plurality of narrower strips

The invention also relates to the use of a security tape as detailed above to secure a remotely detectable security device to an article by affixing a length of said tape to the article.

In a preferred use, the location and/or identity of the article can be determined by remotely detecting said remotely detectable security device.

Such a security strip is much easier to apply to an article than the prior art as it is linerless, ie it does not have a backing liner. Known labels provided on a backing liner can be affixed to articles relatively easily but as the labels become longer (eg for use with larger articles) it becomes increasingly difficult to handle the length of the label to ensure that it does not inadvertently stick to itself or become creased, whilst at the same time removing and disposing of a backing liner. This is clearly exacerbated when a high tack pressure sensitive adhesive is used (as is required for a security label) which is difficult to remove once It has made contact with an article (or to itself).

Such a security tape can be provided in a roll which is much smaller and lighter than the prior art. As will be described below, a 60% weight saving and 50% reduction in diameter of the roll is achievable. This makes it much easier to handle in a hand-held applicator as well as reducing waste and shipping costs.

The term 'remotely detectable security device' used herein is to be understood to include electronic article surveillance (EAS) devices, whether they be magnetic, electro-magnetic (EM), acousto-magnetic (AM), radio frequency (RF), radio frequency Identification (RFID) or use some other technology. Such security tags are well known and in widespread use In retail stores so will not be described further.

Preferred and optional features of the invention will become apparent from the following description and from the subsidiary claims of the specification.

### BRIEF DESCRIPTION OF THE DRAWINGS

The Invention will now be further described, merely by way of example, with reference to the accompanying figures, in which:
Figure 1 Is a schematic diagram Illustrating the layers of known security labels;
Figure 2 Is a schematic diagram Illustrating the layers of a security tape according to an embodiment of the present Invention; and
Figures 3A to 3C are schematic diagrams Illustrating three stages in the manufacture of a security tape according to the present invention and the steps carried out In each stage according to a preferred form of the second aspect of the invention.

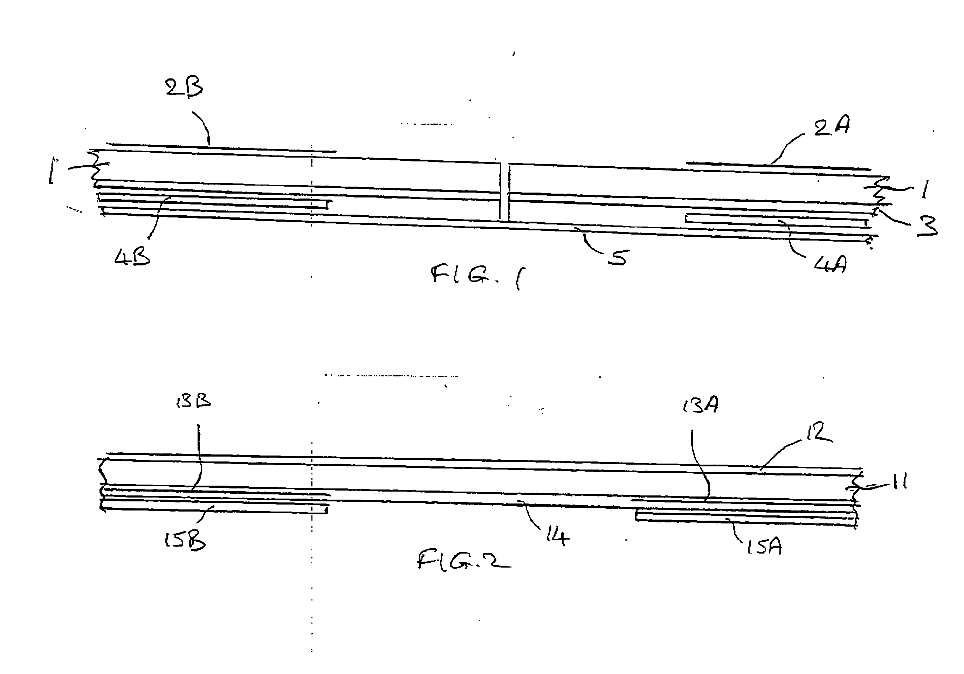

Figure 1 show the layered construction of known security labels. Each label comprises a strip 1 of a plastics sheet material, eg polypropylene. This may be transparent but may also be opaque. Graphics 2A, 2B are printed on the upper surface of the label 1. A layer of adhesive 3 Is provided on the underside of the strip 1 and remotely detectable security devices 4A, 4B are attached to the underside of the strip by the adhesive 3. A backing liner 5 is provided on the underside of the strip so the strip can be wound on itself In a roll without adhering to the upper side of the layer beneath or damaging the graphics 2A, 2B printed thereon. The backing liner is typically a siliconised material, eg paper or a plastics material. The strip 1 is divided into a plurality of lengths to provide the individual labels, eg 450 mm or 200 mm long.

The manufacture of labels of the type shown in Fig 1 typically starts with strip 1 of plastic material having a layer of adhesive 3 and a backing liner 5 on one side thereof. The backing liner 5 Is removed so the security devices 4A can be applied to the adhesive layer 3 and is then re-applied. Graphics 2A, 2B are printed on the other side of the strip 1.

A typical roll of this type comprising 500 lengths of strip, each 450 mm long, has a diameter of around 285 mm and weighs around 2.35 Kg. Or, a roll R5 comprising 1000 lengths of strip, each 200 mm long, may have a diameter of around 260 mm and weigh around 2.55 Kg.

Labels provided on rolls of this size and/or weight are typically applied by hand as they would be very difficult to apply using a hand-held applicator. Automatic labelling machines also become impractical for longer labels (eg 300 mm or longer).

The backing liner is peeled off as the labels are dispensed from the roll and this also has to be disposed of. In view of the silicone layer provided thereon, such material is difficult to recycle,

Fig 2 illustrates a security tape according to a preferred embodiment of the invention. This comprises an elongate strip of transparent sheet material 11, eg polypropylene, with a silicone slip coat 12 provided on the upper surface thereof. Graphics 13A, 13B are printed on the underside of the strip 11 so as to be visible when the strip is viewed from the upperslde and a layer of adhesive 14 is provided on the underside on the tape 11 (and over the graphics 13A, 13B printed thereon). Security devices 15A, 15B are attached to the adhesive layer 14 provided on the underside of the tape.

This security tape thus differs from the prior art shown in Fig 1 in that a) it has a slip coat on its upper surface, b) graphics are printed on the underside (rather than the upper side) of the tape (and arranged so as to be viewed through the transparent tape), c) an adhesive layer Is applied over these graphics, d) it is not divided Into individual labels prior to being dispensed and e) no backing liner is required.

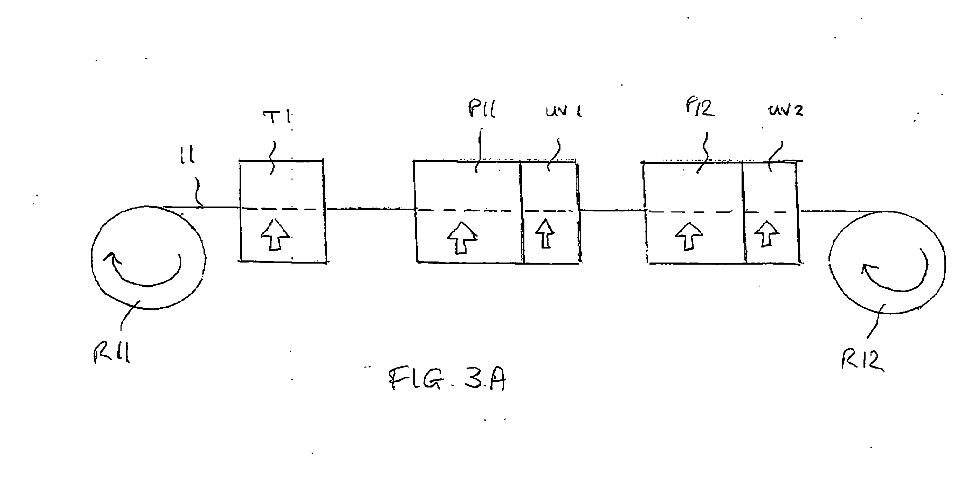

The construction and manufacture of such a security tape provides various challenges as an effective release coating is required if the tape Is to be linerless and it is not possible to print onto a release coating nor onto a tape which Is already provided with an adhesive coating on one side. A preferred method by which such a tape may be manufactured according to the second aspect of the invention, will be described with reference to Figs 3A to 3C.

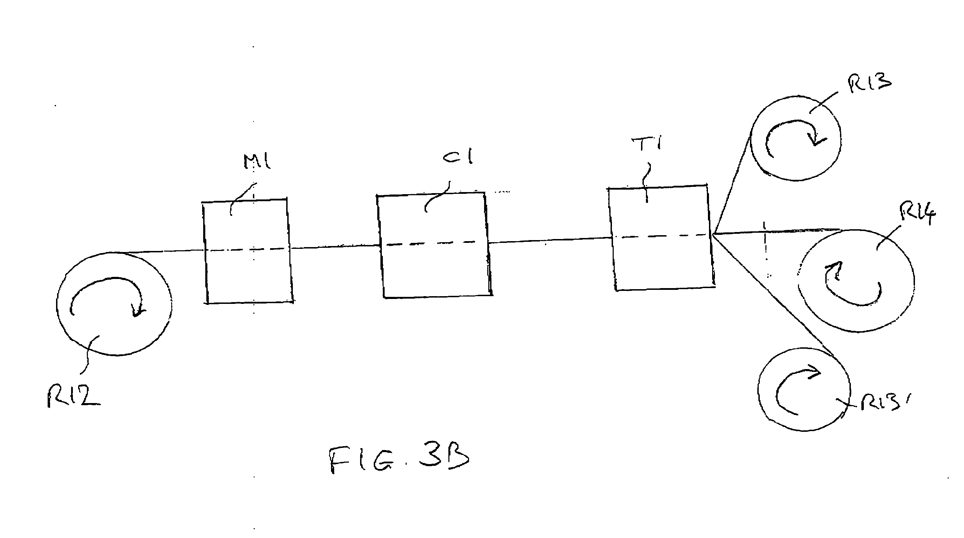

In Fig 3A, the process starts with a roll R11 of a plastic strip 11 with a slip coat 12, eg a silicone coating, provided on the upper surface thereof. In this first stage of the process, the strip Is unwound and the lower surface thereof is corona treated in a corona treatment station T1 to change the surface energy of the material. All materials have an inherent surface energy (dyne level) and corona treatment Is a widely used surface treatment method In the plastic film, extrusion, and converting Industries. This treatment prepares the surface for being printed with graphics. Graphics 13A, 13B are then printed on the underside of the plastic strip 11, eg by a flexographic printing process, and the ink then cured, eg using ultra violet (UV) light. Multiple printing stations may be used, eg one for each colour, and two printing stations P11, P12 are shown in Fig 3A with associated curing stations UV1, UV2. The tape is then rewound Into a roll R12 which is transferred to the second stage of the process illustrated in Fig 3B.

The graphics are reverse printed on the underside of the strip so they can be viewed from the upper side of the strip though the transparent material of the strip.

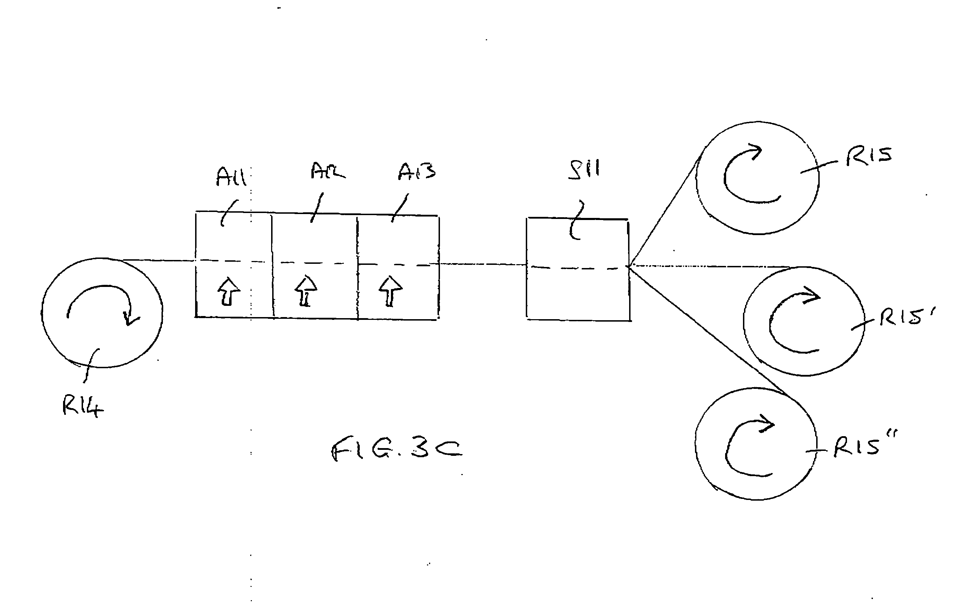

In the second stage of the process, the roll R12 Is unwound and adhesive Is applied to the underside of the strip In an adhesive station M1. The adhesive may be provided in the form of a hot melt which is applied uniformly across the strip (but not right to the edges thereof). The strip is then passed through a cooling station C1, eg in the form of an air curtain, to cool the strip and the adhesive layer formed thereon. As the adhesive cannot be applied right up the edges of the strip, the strip Is them passed through a trimming station T1, eg slitting knives, to trim excess material (typically about 15 mm) off each side of the strip, leaving a strip with an adhesive coating which extends across the complete width thereof. The material trimmed off the edge of the strip Is collected by rollers R13 and R13' and the remaining strip (typically having a width of about 150 mm), is wound onto roller R14 which is transferred to the third stage of the process Illustrated in Fig 3C.

In the third stage of the process, the strip is unwound from roller R14 and security devices are attached to the underside of the strip. The security devices may be attached to the underside of the strip either way up. They are typically provided with adhesive on one face and this face may be placed in contact with the layer of adhesive on the underside of the strip. This provides a very secure attachment to the strip but, in use, when the strip is applied to an article, the security device will not be adhered to the article but merely held in place by the strip. Alternatively, the adhesive face may face away from the strip so that in use, the security device itself Is adheres to the article. This provides an additional level of security as, if the strip is removed, the security device is likely to remain attached to the article.

The security devices are preferably aligned with graphics on the strip to ensure their accurate placement and/or so they are concealed by the graphics. An optical sensor (not shown) may be used to sense the position of the graphics and control the application of a device to ensure It Is affixed in the desired position.

It may be desirable to prevent static build up on the strip and/or devices In stage 3 of the process. This may be achieved by using an air blower of de-ionlsed air and/or the provision of an anti-static bar adjacent the strip.

The strip is typically a wide strip, eg 150 mm wide, which is subsequently divided in the third stage of the process into three narrower strips, eg 50 mm wide, so multiple attachment stations A11, A12, A13 may be provided at different positions across the width of the strip and at staggered positions along the direction of movement of the strip.

As no backing liner is used, the strip is not cut into individual labels but remains as a continuous tape, lengths of which can be cut off (eg by a cutter provided on a hand-held dispenser) as It is applied to an article.

The wide strip is then slit into three narrower strips by cutter station S11 and each strip is then re-wound onto a respective roller R15, R15' and R15".

A typical roll R15 comprising 500 lengths of strip, each 450 mm long, has a diameter of around 220 mm and weighs around 1.05 Kg. Or, a roll R15 comprising 1000 lengths of strip, each 200 mm long, has a diameter of around 185 mm and weighs around 1.05 Kg. It will be appreciated that this represents a substantial reduction in the size and weight of the rolls compared to the prior art described above so the rolls are suitable for use in a hand-held applicator. This significantly improves the ease of handling the strip in a hand applicator. It also substantially reduces shipping costs. In addition, no backing tape Is used so wastage is substantially reduced.

In a preferred arrangement, the security tape comprises at least 500 repeat units In a roll and the roll has a diameter of 250 mm or less.

The above are examples of label and roll sizes typically used - others may be provided.

The plastic strip may be formed from 50 micron bi-axially orientated polypropylene but other material may also be used. One side of this is provided with a silicone release coat. The slip coat needs to provide sufficient release to resist being adhered to by the adhesive used on the tape which, as mentioned, may be an aggressive adhesive in view of the security function if the tape.

The adhesive layer may be applied by passing the strip around a coating roller so that the surface to which the adhesive is to be applied passes adjacent a hot melt dispenser head extending across the width of the strip. Other methods may however be used to apply adhesive.

A typical EAS security device that may be affixed to the strip is an RF device In the form of a label approximately 40 mm × 40 mm (although other sizes are available) Alternatively, or additionally, an AM device may be used. These are typically 10 mm x 45 mm with a thickness of 1-2 mm. An RFID device may also be used, eg in the form of a label typically 40 mm x 40 Mm (again, other sizes are available).

The graphics preferably comprise a thin layer of UV ink which is resistant to being damaged or removed as the strip is unwound and re-wound in the process described above. A flexographic printing process may be used. This involves the use of an anilox Ink roller the surface of which Is provided with a matrix of cells, eg with a cell count of approx 450 per square Inch (70 per square cm), to pick up a desired quantity of ink for transfer onto a printing plate. Printing may, however, be carried out in other ways, eg by digital ink jet or digital laser printing or more traditional methods such as screen printing or offset litho.

As the graphics are provided on the underside of the plastic strip they are, in use, protected from damage, eg when the article to which the tape is applied Is in contact with other articles.

The repeat length of the graphics (and the spacing of the EAS devices) will vary depending upon the application but Is generally at least 190 mm, and preferably 200-300 mm, and may be 500 mm or more.

Whilst a 3-stage manufacturing process has been described above, it will be appreciated that the various stages may be carried out in other ways. One of the rewinding and unwinding stages may, for example, be omitted so that the process is carried out in just two stages.

As indicated above, the security tape described herein may be used In many different situations and with many different articles, It may, for example, be applied to article in a retail store which has sensors at doorways to sense remotely a security device which has not been deactivated, The security tape may also be used to determine the location and/or Identity of a given article, eg to track a package or luggage. The tape may be used to assist in holding the article in a closed configuration, eg to provide tamper evidence or may be simply attached to the exterior of an article.

It will of course be understood that many variations may be made to the above-described embodiment without departing from the scope of the present invention.

## Claims

1. A security tape comprising an elongate strip of transparent sheet material having a first face and a second face, printed graphics provided on said first face so as to be visible when viewed through said second face, pressure sensitive adhesive provided on the first face (and the printed graphics thereon) for securing the tape to an article and/or to itself, a remotely detectable security device secured to the first face of the strip by said adhesive layer and a release coating on said second surface so the tape can be wound onto itself In a roll.

2. A security tape as claimed In claim 1 comprising a plurality of repeat units wound upon each other in a roll, each repeat unit having a length of at least 100 mm, and preferably at least 200 mm, and comprising at least one area printed with graphics and a remotely detectable security device of a first type.

3. A security tape as claimed in claim 1 or 2 in which the remotely detectable security device comprises first and second sides which are opposite each other, the first side being secured to the first face of the strip by the adhesive provided thereon and the second side being provided with further pressure sensitive adhesive so that, when the tape is secured to an article, the device Is also secured to the article by said further adhesive.

4. A security tape as claimed in claim 2 in which each repeat unit comprises a remotely detectable security device of a first type and a remotely detectable security device of a second type.

5. A security tape as claimed in any preceding claim in which the or each remotely detectable security device Is aligned with a portion of said graphics provided on the first face of the strip.

6. A security tape as claimed In any preceding claim comprising a plurality of repeat units wound upon each other in the form of a roll.

7. A method of manufacturing a security strip comprising an elongate strip of transparent material having a first face and a second face with a release coating on said second face, the method comprising the steps:
a) printing graphics on the first face of the strip so as to be visible when viewed through said second face;
b) applying a pressure sensitive adhesive to said first face (and the printed graphics thereon); and
c) securing a remotely detectable security device to the first face of the strip.

8. A method as claimed in claim 7 In which said first face is corona treated prior to the printing of graphics thereon.

9. A method as claimed In claim 7 or 8 in which the graphics are printed by flexographic printing using ultra-violet (UV) cured ink.

10. A method as claimed in claim 7, 8 or 9 In which hot melt adhesive is applied from a nozzle extending across at least part of the width of the strip.

11. A method as claimed in any of claims 7 to 10 in which the elongate strip is provided In the form of a roll which is unwound to carry out the printing step, rewound and then unwound again to apply the adhesive thereto.

12. A method as claimed In claim 11 In which the elongate strip is rewound following application of the adhesive, and then unwound again to secure the remotely detectable security devices thereto and then rewound again.

13. A method as claimed in any of claims 7 to 12 in which said graphics are printed at intervals along the length of the strip and said devices attached at intervals along the length of the strip so that the strip comprises a plurality of unit lengths wound upon each other in a roll, each unit length having a length of at least 100mm, and preferably at least 200 mm, and comprising at least one area printed with graphics and a remotely detectable security device of a first type.

14. The use of a security tape as claimed in any of claims 1 to 7 to secure a remotely detectable security device to an article by affixing a length of said tape to the article.

15. The use claimed in claim 14 In which the length of tape also serves to retain the article in a closed configuration.
